# DEMANDE DE BREVET EUROPEEN

(11) **EP 1 109 008 A1**
(43) Date de publication de la demande: **20.06.2001**
(21) Numéro de dépôt: 00403452.6
(22) Date de dépôt: 08.12.2000
(51) Int. Cl.: G01N 21/88, G01N 21/90, G01N 21/958, G07C 3/14

(54) **Procédé de contrôle de la qualité d'un article notamment en verre**

(30) Priorité: 15.12.1999 FR 9915841
(71) Demandeur: SAINT GOBAIN CINEMATIQUE ET CONTROLE, 92230 Gennevilliers (FR)
(72) Inventeur: Dubois, Philippe, 60128 Mortefontaine (FR); Gibrat, Fabrice, 92320 Chatillon (FR)
(74) Mandataire: de la Bigne, Guillaume Michel Marie

(57) **Abrégé**

L'article, par exemple une bouteille en verre, est susceptible de présenter au moins une particularité, notamment un défaut, visible de l'extérieur de l'article, parmi des particularités de types différents T₁, ..., Ti,..., Tₙ. Dans ce procédé, on réalise l'acquisition une image numérique de l'article, on traite cette image de façon à y extraire une région correspondant à cette particularité visible, on identifie le type de la particularité visible parmi les différents types Tᵢ en calculant au moins un paramètre discriminant P₁, ..., Pⱼ, ..., Pₙ caractérisant la région, et on décide en fonction du type de la particularité si la qualité de l'article est suffisante ou insuffisante. Le cas échéant, on calcule un paramètre de référence PR caractéristique de la région, on compare ce paramètre PR de référence à un paramètre-seuil qui dépend du type de la particularité visible, et on décide en fonction du résultat de cette comparaison si la qualité de l'article est suffisante ou insuffisante.

## Description

La présente invention concerne un procédé de contrôle de la qualité d'un article, notamment en verre.

Elle s'applique en particulier au contrôle de récipients en verre tels que des bouteilles.

On connaît déjà dans l'état de la technique un procédé de contrôle de la qualité d'un article susceptible de présenter au moins une particularité, notamment un défaut, visible de l'extérieur de l'article, parmi des particularités de types différents T₁, ..., Ti,..., Tₙ, dans lequel :
- on réalise l'acquisition d'une image numérique de l'article au moyen d'une caméra matricielle, et
- on traite cette image par filtrage et segmentation de façon à y extraire une région correspondant à la particularité visible.

Habituellement, une bouteille en verre, fabriquée par un procédé de moulage classique, est susceptible de présenter certaines particularités visibles de l'extérieur de cette bouteille, correspondant à des défauts ou non. Les types de particularité les plus courants sont précisés ci-dessous.
(a) Type de particularité ne correspondant pas à un défaut :
   - marque du plan de joint du moule de formage de la bouteille, appelé couramment « joint de moule ».
(b) Types de particularité correspondant à des défauts critiques :
   - « ailette » formée par une saillie externe à la bouteille, dans le prolongement du joint de moule.
   - « balançoire » formée par un fil de verre interne à la bouteille s'étendant entre deux points de la surface interne de cette bouteille.
(c) Types de particularité correspondant à des défauts majeurs.
   - « bouillon » formé par une bulle d'air dans la paroi de la bouteille :

   - « inclusion » correspondant par exemple à des fragments de plomb, de matériaux réfractaires ou à des corps étrangers pris dans la masse de la bouteille.
(d) Type de particularité correspondant à un défaut mineur :
   - « pli » de la surface externe de la bouteille.

Ces différents types de particularité sont illustrés sur les figures annexées qui seront décrites par la suite.

Seuls les types de particularité des paragraphes (b), (c) et (d) ci-dessus constituent des défauts susceptibles de nuire à la qualité d'une bouteille. Le procédé de contrôle de qualité du type précité permet de détecter ces défauts par vision artificielle, sans contact avec la bouteille contrôlée.

A chaque défaut correspond une région de l'image traitée.

On notera qu'on appelle « région » d'une image numérique un ensemble de pixels connexes possédant une propriété commune que ne possèdent pas les ensembles voisins. Une région est donc entourée d'un contour fermé. Une région est reconnue comme telle à partir uniquement de propriétés de l'image : niveau de gris, etc... Pour plus d'informations concernant le traitement d'image en général on pourra se référer par exemple aux « Techniques de l'Ingénieur », 1996, volume « Informatique H3 », pages H3 608-2 et suivantes.

Habituellement, après extraction de la région correspondant à la particularité visible :
- on calcule un paramètre de référence PR caractérisant la région,
- on compare ce paramètre PR de référence à un paramètre-seuil,
- on décide en fonction du résultat de cette comparaison si la qualité de l'article est suffisante ou insuffisante.

Le paramètre de référence associé à une région de l'image traitée est généralement le nombre de pixels de cette région qui caractérise la taille de la région. Le paramètre-seuil correspond donc à une taille critique de la région, c'est-à-dire à un nombre de pixels en-dessous duquel le défaut est considéré acceptable et au-dessus duquel le défaut est considéré inacceptable. Lorsque le défaut est inacceptable, la bouteille défectueuse est généralement extraite de la ligne de production puis recyclée par retour en début de filière de fabrication dans une cuve amont de verre fondu.

Le nombre de pixels d'une région ne permet pas de déduire le type du défaut correspondant à cette région. Or selon que le défaut est d'un type ou d'un autre la taille critique de la région de l'image correspondant à ce défaut peut varier. Ainsi, un pli (défaut mineur) est généralement acceptable même si, après traitement d'image, ce pli génère une région de taille importante, alors qu'une balançoire (défaut critique) est généralement inacceptable même si, après traitement d'image, cette balançoire ne génère qu'une région de taille réduite,.

De façon classique, les procédés de contrôle du type précité détectent les bouteilles défectueuses à partir d'un paramètre-seuil commun à tous les types de défaut. De ce fait, ces procédés classiques sont généralement soit trop sévères, soit pas assez sévères à l'égard de certains types de défaut.

US-4-378 494 décrit un procédé et un dispositif pour détecter des défauts sur des bouteilles. Selon ce procédé, on réalise une inspection complète d'une bouteille par des balayages successifs au moyen d'une caméra comportant des photodiodes disposées en ligne, c'est à dire produisant une image à une seule dimension. Pour réaliser les balayages successifs, la bouteille doit être saisie avec des moyens de préhension appropriés destinés à présenter des zones successives de la bouteille devant la caméra linéaire.

Ce procédé de contrôle perturbe le trajet éventuel de la bouteille sur un convoyeur puisque celle-ci doit être saisie au moment du contrôle. De plus, les déplacements de la bouteille entre deux balayages successifs engendrent des erreurs et imprécisions de localisation de chaque zone balayée. De ce fait, deux balayages successifs ne sont pas parfaitement adjacents, ce qui limite la fiabilité du procédé.

US-5-815 198 décrit un procédé et un dispositif adaptés essentiellement pour détecter des défauts sur des tissus. La détection et l'identification des défauts sont réalisés en analysant des transformées mathématiques calculées à partir de paramètres d'une image numérique à une seule dimension construite suivant une progression fractale. Un tel procédé est très mal adapté au contrôle de produits verriers.

L'invention a pour but de proposer un procédé de contrôle de la qualité d'un article notamment en verre, permettant une discrimination précise des articles défectueux en fonction de la gravité des défauts.

A cet effet, l'invention a pour objet un procédé de contrôle de la qualité d'un article, du type précité, **caractérisé en ce que** :
- on identifie le type de la particularité visible parmi les différents types Tᵢ en calculant au moins un paramètre discriminant P₁,..., Pⱼ,..., Pₙ caractérisant la région,
- on décide en fonction du type de la particularité si la qualité de l'article est suffisante ou insuffisante.

Suivant d'autres caractéristiques de ce procédé :
- on calcule un paramètre de référence PR caractérisant la région,

on compare ce paramètre PR de référence à un paramètre-seuil dépendant du type de la particularité visible, et
on décide en fonction du résultat de cette comparaison si la qualité de l'article est suffisante ou insuffisante ;

- le paramètre de référence PR est le nombre de pixels de la région ;
- on distingue des premier et deuxième ensembles de types Tᵢ de particularités, tels que, tout type Tᵢ de particularité du premier ensemble corresponde à un défaut rédhibitoire et tout type Tᵢ de particularité du deuxième ensemble corresponde à un défaut dont le caractère rédhibitoire dépend du paramètre de référence PR ;
- on distingue un troisième ensemble de types Tᵢ de particularités, tel qu'aucun type Tᵢ de particularité du troisième ensemble ne corresponde à un défaut éventuellement rédhibitoire ;
- pour identifier le type de la particularité visible parmi les types Tᵢ de particularité,
   a) on associe à chaque paramètre discriminant Pⱼ, un paramètre discriminant flou PⱼF, et
   pour chaque type Tᵢ de particularité, une
   distribution de possibilité Dᵢⱼ sur l'ensemble des valeurs possibles du paramètre discriminant Pⱼ, cette distribution exprimant le degré avec lequel il est possible qu'un type Tᵢ de particularité soit identifié au vu du paramètre discriminant Pⱼ,
   b) on évalue la compatibilité du paramètre flou PⱼF avec la distribution de possibilité Dᵢⱼ pour déduire la possibilité Aᵢⱼ d'avoir identifié le type Tᵢ de particularité au vu du paramètre discriminant Pⱼ;
   - on calcule au moins deux paramètres discriminants distincts Pⱼ, Pₖ et,
   pour chaque type Tᵢ de particularité, on calcule les deux possibilités correspondantes Aᵢⱼ, Aᵢₖ d'avoir identifié le type Tᵢ de particularité au vu des deux paramètres discriminants Pⱼ, Pₖ et on détermine la possibilité minimale min(Aᵢⱼ, Aᵢₖ) d'avoir identifié le type Tᵢ de particularité, et
   on compare entre elle les possibilités minimales min(Aᵢⱼ, Aᵢₖ) de chaque type Tᵢ de particularité pour décider lequel des types Tᵢ de particularité correspond à la particularité visible ;
- on considère que le type de la particularité visible est le type Tᵢ de particularité ayant la possibilité minimale min(Aᵢⱼ, Aᵢₖ) la plus élevée ;
- on considère que le type de la particularité visible est le type Tᵢ de particularité ayant la possibilité minimale min(Aᵢⱼ, Aᵢₖ) la plus élevée, à condition que cette possibilité minimale min(Aᵢⱼ, Aᵢₖ) la plus élevée soit supérieure à un seuil prédéterminé ;
- on considère que le type de la particularité visible est le type Tᵢ de particularité ayant la possibilité minimale min(Aᵢⱼ, Aᵢₖ) la plus élevée, à condition que la différence entre la possibilité minimale min(Aᵢⱼ, Aᵢₖ) la plus élevée et la possibilité minimale min(Aᵢⱼ, Aᵢₖ) la plus faible soit supérieure à un seuil prédéterminé ;
- en cas de décision d'insuffisance de qualité de l'article, celui-ci est acheminé vers une filière de recyclage ou de rejet qui dépend du type Tᵢ de particularité identifié ;
- chaque paramètre discriminant d'une région est choisi parmi des paramètres caractérisant l'allongement de la région, l'orientation de cette région par rapport à une direction de référence, la forme de la région par rapport à une forme de référence, telle qu'un rectangle englobant cette région ou l'aspect ajouré de la région ;
- on définit au moins trois types Tᵢ distincts de particularités ;
- l'article est en verre et constitue par exemple un récipient ;
- le procédé est mis en oeuvre par un programme d'ordinateur.

L'invention sera mieux comprise à la lecture de la description qui va suivre donnée uniquement à titre d'exemple et faite en se référant aux dessins dans lesquels :
- les figures 1 à 6 sont des vues de bouteilles en verre présentant des particularités visibles de l'extérieur de celles-ci, la qualité de ces bouteilles pouvant être contrôlée par un procédé selon l'invention ;
- les figures 7 et 8 sont des vues schématiques de régions d'images traitées correspondant à des particularités telles qu'illustrées sur les figures 1 à 6 ;
- les figures 9 à 29 sont des schémas illustrant des outils mathématiques de logique floue mis en oeuvre pour identifier le type d'une particularité telle qu'illustrée sur les figures 1 à 6 ;
- les figures 30 et 31 sont des tableaux regroupant des résultats obtenus par les outils de logique floue illustrés sur les figures 9 à 29.

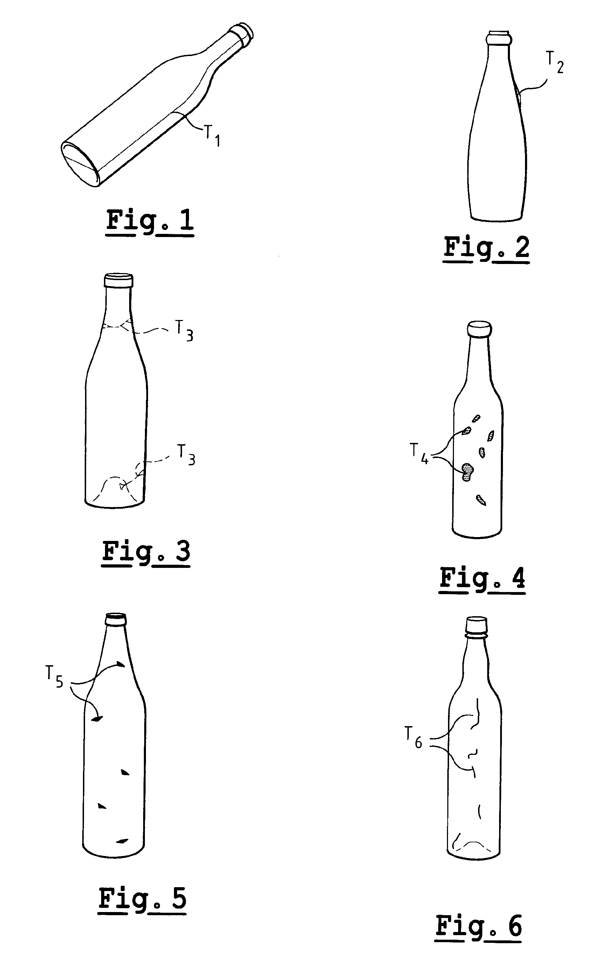

On a représenté sur les figures 1 à 6 des bouteilles présentant des particularités visibles de l'extérieur de celles-ci. La figure 1 illustre une bouteille sur laquelle est visible un joint de moule T₁. La figure 2 illustre une bouteille sur laquelle est visible une ailette T₂. La figure 3 illustre une bouteille sur laquelle sont visibles des balançoires T₃, une première balançoire s'étendant dans la région du col de la bouteille et la seconde balançoire s'étendant dans la région du culot de cette bouteille. La figure 4 illustre une bouteille présentant des bouillons T₄. La figure 5 illustre une bouteille présentant des inclusions T₅. La figure 6 illustre une bouteille présentant des plis T₆.

Le joint de moule T₁ illustré sur la figure 1 ne correspond pas à un défaut. Les particularités T₂ à T₆ illustrées sur les figures 2 à 6 correspondent à des défauts qui, selon leur gravité, sont susceptibles d'être incompatibles avec la qualité requise pour les bouteilles.

Les figures 1 à 6 illustrent donc chacune un type différent de particularité. Bien entendu, une bouteille en verre peut présenter d'autres particularités visibles de l'extérieur de celle-ci que celles illustrées à titre d'exemple sur les figures 1 à 6.

Le procédé selon l'invention permet de contrôler la qualité d'un article, tel qu'une bouteille en verre, susceptible de présenter au moins une particularité, notamment un défaut, visible de l'extérieur de l'article parmi des particularités de types différents T₁,..., Tᵢ,..., Tₙ (i est un entier naturel ≥ 1), tels que les types de particularité illustrés sur les figures 1 à 6.

Selon ce procédé, tout d'abord, on réalise l'acquisition d'une image numérique de la bouteille, de préférence à haute résolution, au moyen d'au moins une caméra matricielle. Ce type de caméra permet d'acquérir une image à deux dimensions appelées verticale et horizontale respectivement.

Puis on traite l'image de façon à y extraire, en cas de présence d'un particularité visible, une région correspondant à cette particularité visible.

L'image numérique est traitée de façon connue en soi, notamment par filtrage et segmentation de cette image, de façon à extraire toute région correspondant à une particularité visible.

Une opération de filtrage comprend classiquement :
- le renforcement de l'homogénéité à l'intérieur des régions (réduction de bruit) ;
- la préservation de la forme des régions ;
- le renforcement des différences entre les pixels appartenant à des régions adjacentes (rehaussement de contraste).

Une opération de segmentation consiste classiquement à extraire les régions constituant une image en vue notamment de mesurer des paramètres qui les caractérisent.

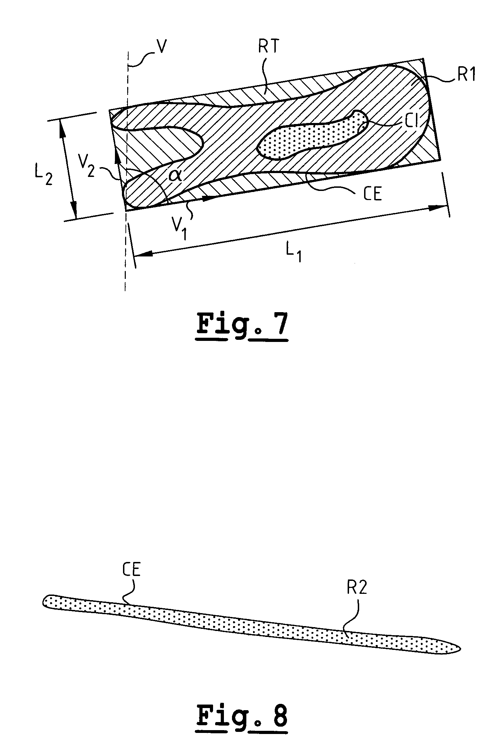

Sur les figures 7 et 8, on a représenté schématiquement deux régions R1 et R2 correspondant à deux particularités visibles, obtenues après traitement d'image.

Après extraction d'au moins une région, on identifie le type de la particularité visible (correspondant à la région extraite de l'image) parmi les différents types Tᵢ en calculant au moins un paramètre discriminant P₁,..., Pⱼ,..., Pₙ (j est un entier naturel ≥ 1) caractérisant la région.

Ensuite, on décide en fonction du type de la particularité si la qualité de l'article est suffisante ou insuffisante.

A cet effet, on distingue de préférence des premier, deuxième et troisième ensembles de types Tᵢ de particularités de la façon suivante.

Tout type Tᵢ de particularité du premier ensemble correspond à un défaut rédhibitoire. Les ailettes et balançoires appartiennent de préférence au premier ensemble.

Tout type Tᵢ de particularité du deuxième ensemble correspond à un défaut dont le caractère rédhibitoire dépend d'un paramètre de référence PR caractéristique de la région. Les bouillons, plis et inclusions appartiennent de préférence au deuxième ensemble.

Aucun type Tᵢ de particularité du troisième ensemble ne correspond à un défaut éventuellement rédhibitoire. Les marques de plan de joint appartiennent de préférence au troisième ensemble.

Si le type Tᵢ de particularité appartient au premier ensemble de défauts rédhibitoires, on décide que la qualité de la bouteille est insuffisante.

Si le type Tᵢ de particularité appartient au troisième ensemble, on décide que la qualité de la bouteille est suffisante.

Si le type Tᵢ de particularité appartient au deuxième ensemble de défauts éventuellement rédhibitoires, tout d'abord, on calcule le paramètre de référence PR qui est de préférence le nombre de pixels de la région, puis, on compare le paramètre de référence PR à un paramètre-seuil dont la valeur dépend du type de la particularité visible.

Le paramètre-seuil est un nombre-seuil de pixels de la région considérée au-delà duquel cette région correspond à un défaut incompatible avec la qualité requise de la bouteille. Bien entendu, le paramètre-seuil aura une valeur différente selon que le type de particularité identifié est une ailette, une balançoire, un bouillon, une inclusion, un pli, etc...

Enfin, on décide, en fonction du résultat de la comparaison entre le paramètre de référence PR et le paramètre-seuil, si la particularité identifiée est incompatible avec la qualité requise de la bouteille.

Lorsque la qualité de la bouteille est considérée insuffisante car présentant une particularité correspondant à un défaut grave incompatible avec la qualité de cette bouteille, la bouteille est recyclée ou rejetée selon le type du défaut identifié. Ainsi, si le type de défaut est par exemple une ailette, une balançoire, un bouillon ou un pli, la bouteille sera recyclée par retour en début de filière de fabrication, en particulier dans une cuve amont de verre fondu. Par contre, si le type de défaut est une inclusion, c'est-à-dire un corps étranger pris accidentellement dans la masse de la bouteille, celle-ci n'est pas recyclée dans la même filière de fabrication de façon à ne pas polluer la cuve de verre fondu en amont de la filière.

Par ailleurs, après avoir identifié le type de la particularité visible, si cette particularité est un défaut, on peut agir en retour sur la filière de fabrication des bouteilles, notamment sur le réglage du moule de fabrication de cette bouteille de façon à corriger le défaut.

On indiquera ci-dessous un procédé pour identifier le type de la particularité visible parmi les types Tᵢ de particularité en utilisant la logique floue.

En ce qui concerne les principes généraux de la logique floue, on pourra se référer utilement à l'ouvrage de la collection « Que sais-je ? », «La Logique Floue » de Bernadette BOUCHON-MEUNIER, Presses Universitaires de France, deuxième édition corrigée, avril 1994.

Tout d'abord on donnera des exemples de paramètres discriminants susceptibles de caractériser une région d'image.

Sur la figure 7, on a déterminé, par des calculs classiques, le rectangle RT englobant la région R1. La plus grande dimension de ce rectangle L₁ est parallèle à la direction principale de la région R1 qui est déterminée par un calcul classique de vecteurs propres (V₁, V₂) associés à la région R1. La région R1 est délimitée, dans l'exemple illustré, par des contours interne CI et externe CE.

L₂ étant la plus petite dimension du rectangle englobant RT, on peut définir un paramètre discriminant P₁ par le rapport L₂/L₁. Ce rapport P₁ caractérise l'allongement de la région R1. Plus cette région R1 est allongée, plus le rapport P₁ tend vers 0.

Un autre paramètre discriminant P₂ peut être défini par l'angle α entre une direction verticale de référence V et le vecteur propre V₁ parallèle à la direction principale de la région R1. Ce paramètre discriminant P₂ caractérise l'orientation générale de la région R1.

Un autre paramètre discriminant P₃ peut être défini par le rapport : nombre de pixels de la région R1/nombre de pixels du rectangle englobant RT. Ce rapport P₃ caractérise la capacité de la région R1 à remplir le rectangle englobant RT. Plus le rapport P₃ tend vers 1, plus la région R1 a une forme rectangulaire et moins cette région R1 présente de trous.

Un autre paramètre discriminant P₄ peut être défini par le rapport : nombre de pixels du contour CI de la région R1/nombre de pixels du contour CE de la région R1. Ce rapport P₄ permet d'apprécier l'aspect ajouré de la région R1. Plus P₄ tend vers 1, plus la région R1 est ajourée. Plus P₄ tend vers 0 plus la région R1 est pleine.

Un autre paramètre discriminant P₅, particulièrement adapté à une région correspondant à un pli telle que la région R2 représentée sur la figure 8, peut être défini par le rapport : nombre de pixels du contour CE/ nombre de pixels de la région R2. Plus P₅ tend vers 1, plus on caractérise un pli. Plus P₅ tend vers 0, plus on caractérise une inclusion.

On identifie le type de la particularité visible parmi les types Tᵢ de particularité de la façon suivante.

Tout d'abord, on associe à chaque paramètre discriminant Pⱼ :
- un paramètre discriminant flou PⱼF traduisant une connaissance imprécise de Pⱼ (« environ Pj »), et
- pour chaque type Tᵢ de particularité, une distribution de possibilités Dᵢⱼ sur l'ensemble des valeurs possibles du paramètre discriminant Pⱼ, cette distribution exprimant le degré avec lequel il est possible qu'un type Tᵢ de particularité soit identifié au vu du paramètre discriminant Pⱼ.

Le paramètre discriminant flou PⱼF est défini de façon classique par une fonction de forme triangulaire telle qu'évoquée dans l'ouvrage précité « La Logique Floue », chapitre II, paragraphe II, point 3.

La distribution de possibilité Dᵢⱼ est une fonction définie de façon classique comme indiqué dans l'ouvrage précité « La Logique Floue », chapitre III, paragraphe I, point 2.

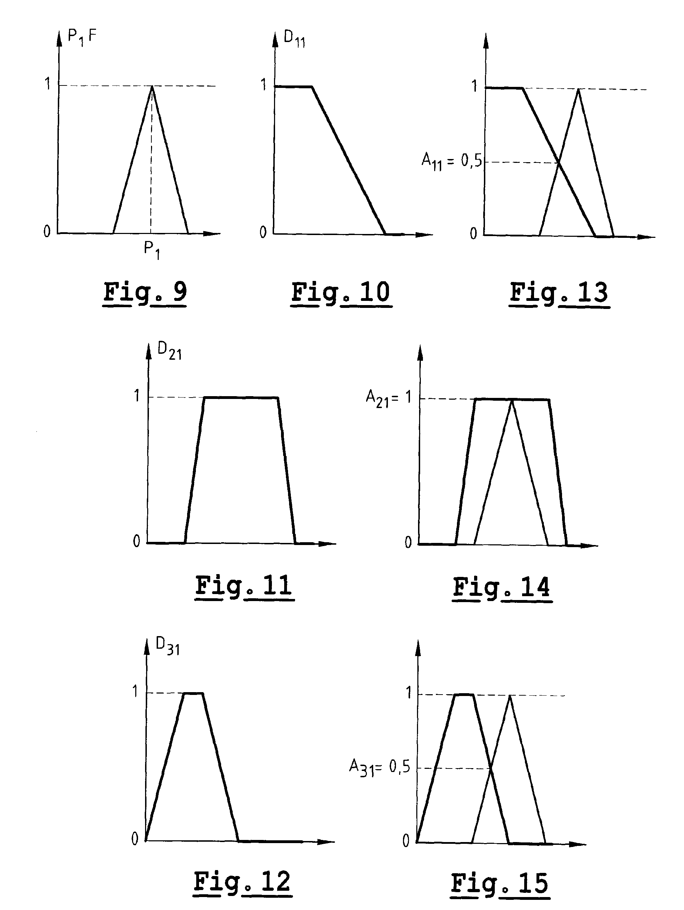

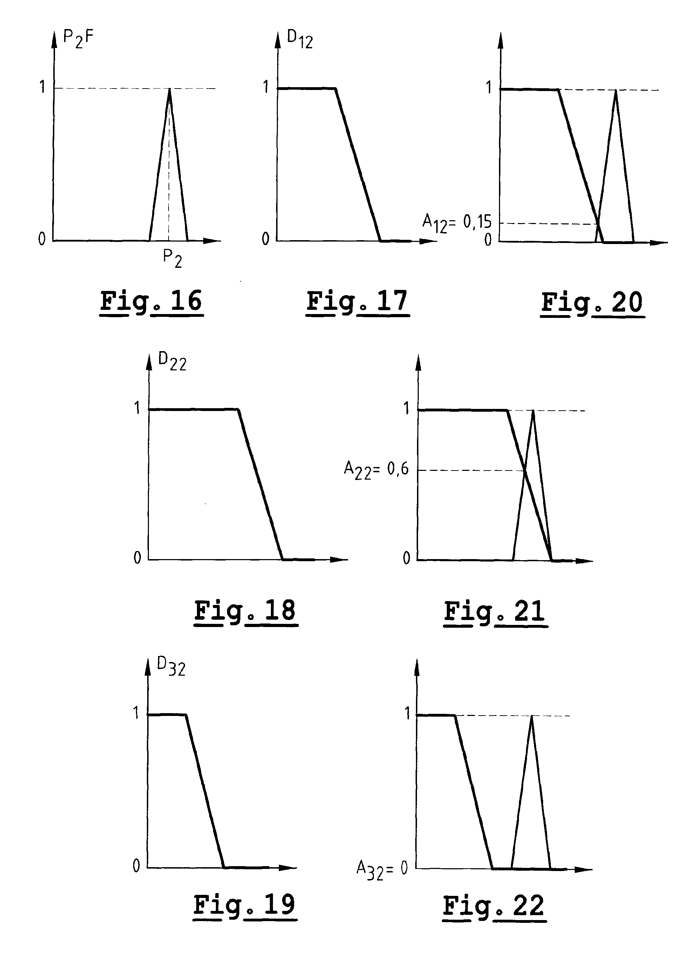

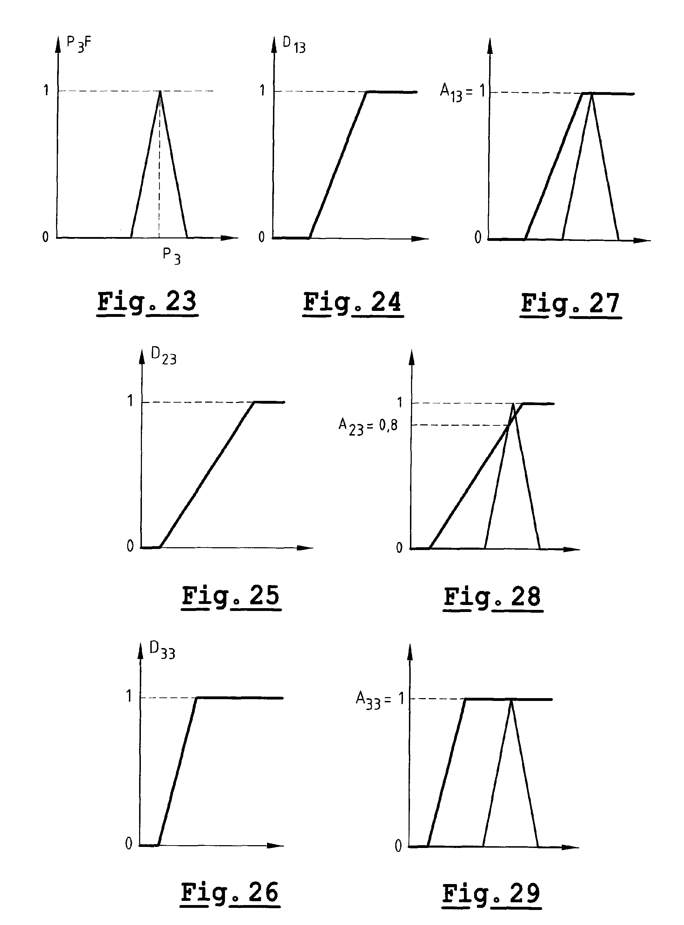

Les figures 9 à 29 concernent un exemple dans lequel on a considéré trois paramètres discriminants P₁ à P₃, qui ne sont pas nécessairement les paramètres discriminants évoqués à titre d'exemple précédemment et portant le même indice. Par ailleurs, l'exemple des figures 9 à 29 prend en compte uniquement trois types Tᵢ de défaut.

Sur les figures 9, 16 et 23, on a illustré des paramètres discriminants flous P₁F à P₃F associés aux paramètres discriminants P₁ à P₃. Ces figures 9, 16 et 23 traduisent que le paramètre discriminant Pⱼ est connu imprécisément. Le paramètre discriminant flou PⱼF traduit la notion de « environ Pⱼ ».

Sur les figures 10 à 12, 17 à 19 et 24 à 26, on a représenté trois distributions de possibilité Dᵢⱼ correspondant aux trois types Tᵢ de défaut et associées respectivement à chacun des paramètres discriminants Pᵢ(Dᵢⱼ = 1 : il est certain que la particularité soit de type Tᵢ au vu du paramètre Pⱼ; Dᵢⱼ = 0 : il est impossible que la particularité soit de type T₁ au vu du paramètre Pⱼ).

Après avoir établi les paramètres discriminants flous PⱼF et les distributions de possibilité Dᵢⱼ, on évalue la compatibilité de chaque paramètre flou PⱼF avec chaque distribution de possibilité Dᵢⱼ pour déduire la possibilité Aᵢⱼ d'avoir identifié le type Tᵢ de particularité au vu du paramètre discriminant Pⱼ.

Les définitions de « compatibilité d'un paramètre flou avec une distribution de possibilité » et de « possibilité » sont classiques et rappelées par exemple dans l'ouvrage précité, « La Logique Floue », chapitre III, paragraphe IV.

Les figures 13 à 15, 20 à 22 et 27 à 29 illustrent la compatibilité des paramètres flous P₁F à P₃F avec les distributions de possibilité Dᵢⱼ illustrées sur les figures 10 à 12, 17 à 19 et 24 à 26. Les possibilités Aᵢⱼ, correspondant aux exemples illustrés sur les figures, sont indiquées sur les figures 13 à 15, 20 à 22 et 27 à 29.

Généralement on calcule au moins deux paramètres discriminants distincts Pⱼ, Pₖ.

Dans ce qui suit, on précisera comment déterminer le type de la particularité visible parmi les types Tᵢ de particularité en considérant uniquement deux paramètres discriminants distincts Pⱼ, Pₖ, le procédé s'extrapolant à un plus grand nombre de paramètres discriminants sans difficulté.

Pour chaque type Tᵢ de particularité, on calcule les deux possibilités correspondantes Aᵢⱼ, Aᵢₖ d'avoir identifié le type Tᵢ de particularité au vu des deux paramètres discriminants Pⱼ, Pₖ, et on détermine la possibilité minimale min(Aᵢⱼ, Aᵢₖ) d'avoir identifié le type Tᵢ de particularité.

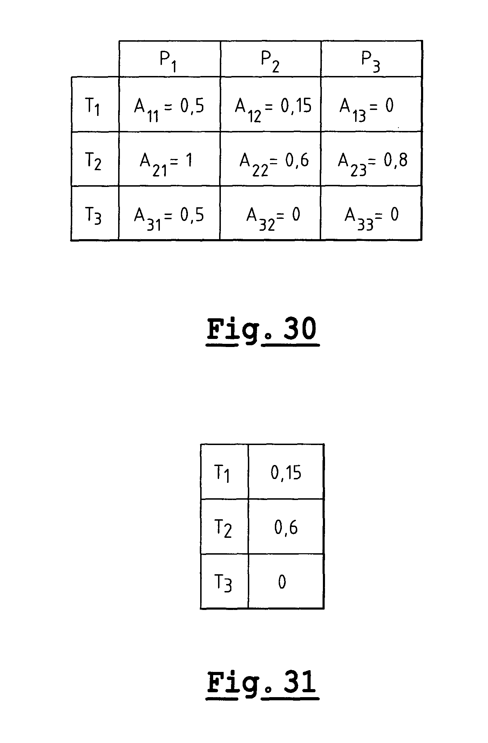

Ensuite, on compare entre elles les possibilités minimales min(Aᵢⱼ, Aᵢₖ) de chaque type Tᵢ de particularité pour décider lequel des types Tᵢ de particularité correspond à la particularité visible. Sur la figure 30, on a regroupé dans un tableau les possibilités Aᵢⱼ d'avoir identifié un type Tᵢ de particularité au vu du paramètre discriminant Pⱼ dans le cas de l'exemple des figures 9 à 29.

Sur la figure 31, on a représenté le tableau regroupant, pour chaque type Tᵢ de particularité la possibilité minimale parmi les valeurs de possibilité apparaissant dans le tableau de la figure 30.

Le tableau de la figure 31 se lit donc de la façon suivante : il y a 15% de possibilités que la particularité visible soit de type T₁, 60% de possibilités que la particularité visible soit de type T₂ et il est impossible que la particularité visible soit de type T₃.

Pour déduire le type de la particularité visible, on peut décider que le type de cette particularité est le type Tᵢ ayant la possibilité minimale min(Aᵢⱼ, Aᵢₖ) la plus élevée. Dans le cas de la figure 31, le type identifié est alors le type T₂.

En variante, on peut considérer que le type de la particularité visible est le type Tᵢ de particularité ayant la possibilité minimale min(Aᵢⱼ, Aᵢₖ) la plus élevée, à condition que cette possibilité minimale min(Aᵢⱼ, Aᵢₖ) la plus élevée soit supérieure à un seuil prédéterminé.

Ceci peut conduire à ce qu'aucun type Tᵢ de particularité soit reconnu. Dans ce cas, on prévoira d'éliminer ou de conserver la bouteille contrôlée en conséquence.

Suivant une autre variante, on peut considérer que le type de la particularité visible est le type Tᵢ de particularité ayant la possibilité minimale min(Aᵢⱼ, Aᵢₖ) la plus élevée, à condition que la différence entre la possibilité minimale min(Aᵢⱼ, Aᵢₖ) la plus élevée et la possibilité minimale min(Aᵢⱼ, Aᵢₖ) la plus faible soit supérieure à un seuil prédéterminé.

Ceci peut également conduire à ce qu'aucun type Tᵢ de particularité soit reconnu.

Une fois le type Tᵢ de la particularité identifié, on compare le cas échéant le paramètre de référence PR (nombre de pixels de la région) au paramètre-seuil associé au type Tᵢ.

En fonction du résultat de cette comparaison, on peut décider si la qualité de la bouteille est suffisante ou insuffisante.

De préférence, le procédé selon l'invention est mis en oeuvre par au moins un programme d'ordinateur.

Parmi les avantages de l'invention, on notera que celle-ci permet de contrôler la qualité d'articles, notamment en verre, en discriminant de façon précise les bouteilles défectueuses en fonction du type de défaut et de la gravité de ce défaut.

L'acquisition d'une image au moyen d'une caméra matricielle (image à deux dimensions) permet d'éviter les balayages multiples de l'article à contrôler réalisés dans l'état de la technique au moyen d'une caméra linéaire. Dans l'invention, une région (ensemble de pixels), correspondant à une particularité de l'article, est acquise à partir d'une seule image. Pour que chaque particularité d'un article puisse être vue en totalité par une caméra matricielle, on peut recourir à trois ou quatre caméras matricielles disposées autour de l'article.

Le procédé de contrôle selon l'invention permet de réguler la filière de fabrication de bouteilles en verre en fonction du type de défaut identifié, notamment en agissant sur le réglage des moyens de moulage des bouteilles. Selon le type de défaut identifié, on agira sur un poste particulier de la filière.

Bien entendu, le procédé de contrôle selon l'invention peut s'appliquer à des articles en verre autres que des bouteilles, en particulier des récipients divers. De plus, ce procédé peut s'appliquer à des articles fabriqués dans d'autres matériaux que le verre.

Enfin, on notera que l'identification du type de la particularité visible parmi les différents types Tᵢ peut être réalisée en traitant les paramètres discriminants Pⱼ caractérisant la région avec d'autres outils mathématiques que ceux proposés par la théorie de la logique floue.

## Revendications

1. Procédé de contrôle de la qualité d'un article susceptible de présenter au moins une particularité, notamment un défaut, visible de l'extérieur de l'article, parmi des particularités de types différents T₁,..., Ti,..., Tₙ, dans lequel :
- on réalise l'acquisition d'une image numérique de l'article au moyen d'une caméra matricielle, et
- on traite cette image par filtrage et segmentation de façon à y extraire une région (R1, R2) correspondant à la particularité visible,
**caractérisé en ce que** :
- on identifie le type de la particularité visible parmi les différents types Tᵢ en calculant au moins un paramètre discriminant P₁,..., Pⱼ,..., Pₙ caractérisant la région,
- on décide en fonction du type de la particularité si la qualité de l'article est suffisante ou insuffisante.

2. Procédé selon la revendication 1, caractérisé en ce que :
- on calcule un paramètre de référence PR caractérisant la région (R1, R2),
- on compare ce paramètre PR de référence à un paramètre-seuil dépendant du type de la particularité visible, et
- on décide en fonction du résultat de cette comparaison si la qualité de l'article est suffisante ou insuffisante.

3. Procédé selon la revendication 2, caractérisé en ce que le paramètre de référence PR est le nombre de pixels de la région.

4. Procédé selon la revendication 2 ou 3,
caractérisé en ce que l'on distingue des premier et deuxième ensembles de types Tᵢ de particularités, tels que, tout type Tᵢ de particularité du premier ensemble corresponde à un défaut rédhibitoire et tout type Tᵢ de particularité du deuxième ensemble corresponde à un défaut dont le caractère rédhibitoire dépend du paramètre de référence PR.

5. Procédé selon la revendication 4, caractérisé en ce que l'on distingue un troisième ensemble de types Tᵢ de particularités, tel qu'aucun type Tᵢ de particularité du troisième ensemble ne corresponde à un défaut éventuellement rédhibitoire.

6. Procédé selon l'une quelconque des revendications précédentes, caractérisé en ce que, pour identifier le type de la particularité visible parmi les types Tᵢ de particularité,
a) on associe à chaque paramètre discriminant Pⱼ,
- un paramètre discriminant flou PⱼF, et
- pour chaque type Tᵢ de particularité, une distribution de possibilité Dᵢⱼ sur l'ensemble des valeurs possibles du paramètre discriminant Pⱼ, cette distribution exprimant le degré avec lequel il est possible qu'un type Tᵢ de particularité soit identifié au vu du paramètre discriminant Pⱼ,
b) on évalue la compatibilité du paramètre flou PⱼF avec la distribution de possibilité Dᵢⱼ pour déduire la possibilité Aᵢⱼ d'avoir identifié le type Tᵢ de particularité au vu du paramètre discriminant Pⱼ.

7. Procédé selon la revendication 6, caractérisé en ce que :
- on calcule au moins deux paramètres discriminants distincts Pⱼ, Pₖ et
- pour chaque type Tᵢ de particularité, on calcule les deux possibilités correspondantes Aᵢⱼ, Aᵢₖ d'avoir identifié le type Tᵢ de particularité au vu des deux paramètres discriminants Pⱼ, Pₖ et on détermine la possibilité minimale min(Aᵢⱼ, Aᵢₖ) d'avoir identifié le type Tᵢ de particularité, et
- on compare entre elle les possibilités minimales min(Aᵢⱼ, Aᵢₖ) de chaque type Tᵢ de particularité pour décider lequel des types Tᵢ de particularité correspond à la particularité visible.

8. Procédé selon la revendication 7, caractérisé en ce que l'on considère que le type de la particularité visible est le type Tᵢ de particularité ayant la possibilité minimale min(Aᵢⱼ, Aᵢₖ) la plus élevée.

9. Procédé selon la revendication 7, caractérisé en ce que l'on considère que le type de la particularité visible est le type Tᵢ de particularité ayant la possibilité minimale min(Aᵢⱼ, Aᵢₖ) la plus élevée, à condition que cette possibilité minimale min(Aᵢⱼ, Aᵢₖ) la plus élevée soit supérieure à un seuil prédéterminé.

10. Procédé selon la revendication 7, caractérisée en ce que l'on considère que le type de la particularité visible est le type Tᵢ de particularité ayant la possibilité minimale min(Aᵢⱼ, Aᵢₖ) la plus élevée, à condition que la différence entre la possibilité minimale min(Aᵢⱼ, Aᵢₖ) la plus élevée et la possibilité minimale min(Aᵢⱼ, Aᵢₖ) la plus faible soit supérieure à un seuil prédéterminé.

11. Procédé selon l'une quelconque des revendications précédentes, caractérisé en ce que, en cas de décision d'insuffisance de qualité de l'article, celui-ci est acheminé vers une filière de recyclage ou de rejet qui dépend du type Tᵢ de particularité identifié.

12. Procédé selon l'une quelconque des revendications précédentes, caractérisé en ce que chaque paramètre discriminant d'une région (R1, R2) est choisi parmi des paramètres caractérisant l'allongement de la région (R1, R2), l'orientation de cette région par rapport à une direction de référence (V), la forme de la région (R1 , R2) par rapport à une forme de référence, telle qu'un rectangle englobant cette région (R1, R2) ou l'aspect ajouré de la région (R1, R2).

13. Procédé selon l'une quelconque des revendications précédentes, caractérisé en ce que l'on définit au moins trois types Tᵢ distincts de particularités.

14. Procédé selon l'une quelconque des revendications précédentes, caractérisé en ce que l'article est en verre et constitue par exemple un récipient.

15. Procédé selon l'une quelconque des revendications précédentes, caractérisé en ce qu'il est mis en oeuvre par un programme d'ordinateur.
